# EUROPEAN PATENT SPECIFICATION

(11) **EP 4 473 877 B1**
(45) Date of publication and mention of the grant of the patent: **01.10.2025**
(21) Application number: 24177863.8
(22) Date of filing: 24.05.2024
(51) Int. Cl.: A47J 42/18

(54) **COFFEE GRINDER EQUIPPED WITH MEANS FOR ADJUSTING AND DISPLAYING THE DISTANCE BETWEEN THE BLADES**
KAFFEEMÜHLE MIT MITTELN ZUR EINSTELLUNG UND ANZEIGE DES ABSTANDES ZWISCHEN DEN MESSERN
MOULIN À CAFÉ ÉQUIPÉ DE MOYENS DE RÉGLAGE ET D'AFFICHAGE DE LA DISTANCE ENTRE LES LAMES

(30) Priority: 06.06.2023 IT 202300002385 U
(43) Date of publication of application: 11.12.2024
(73) Proprietor: Conti Valerio - S.r.l., 50019 Sesto Fiorentino (FI) (IT)
(72) Inventor: FIORANI, Maurizio, 20122 MILANO (IT)
(74) Representative: Baldi, Claudio

(56) References cited:
- CH-A- 516 301
- DE-A1- 4 016 924
- DE-B- 1 114 284
- DE-C- 820 951
- US-A1- 2021 106 177

## Description

The present patent application for industrial invention relates to an electrically operated coffee grinder equipped with means for adjusting and displaying the distance between the blades.

The peculiarities and advantages of the present invention will become more apparent following a brief description of the prior art and its drawbacks.

As it is well known, an electric coffee grinder is a machine that is supplied with coffee beans for the purpose of converting them into coffee powder.

With this in mind, a typical coffee grinder is provided with a hopper where the coffee beans are loaded and directed towards a pair of blades, namely a fixed blade and a rotating blade, under the action of which the beans are effectively pulverized.

One of the benefits that are traditionally offered by a typical coffee grinder is to allow the user to adjust the grain size of the ground coffee as desired.

In particular, such a possibility is implemented by moving the two blades either closer or farther to/from each other, in such a condition that a greater proximity between the blades generates a coffee powder with a smaller grain size and vice versa in the opposite case.

More specifically, it is envisaged that the rotating blade can vary its position (getting either closer or farther) with respect to the fixed blade. The document CH 516 301 A discloses a grinder with a motor having a shaft moving axially to change the position of the grinding blade attached thereto.

It must be considered that the rotating blade is keyed to the shaft of the motor of the coffee grinder and that the variation of the distance from the fixed blade is a consequence of the sliding movement in either direction of the shaft that drives and supports it.

Having clarified that it is actually the sliding of the shaft of the motor that allows the user to adjust the grain size of the coffee powder produced by the coffee grinder, it is simply necessary to illustrate the normal solution adopted in the current coffee grinders to allow the user to adjust the position of the shaft of the motor and consequently the position of the rotating blade with respect to the fixed blade.

A crown with a knurled outer surface is keyed onto the shaft, with the possibility of being reached through an access formed on the body of the coffee grinder.

When it comes to adjusting the position of the rotating blade with respect to the fixed blade, the user simply needs to manually operate the crown that is keyed on the shaft of the motor in order to obtain a forward or backward travel of the shaft, respectively.

In spite of being largely used, such a technology is impaired by an important practical limitation arising mainly from the empirical nature of the logic used to set the grain size of the coffee powder.

Otherwise said, the user instinctively adjusts the position of the rotating blade, advancing or retracting it with respect to the fixed blade, without having the opportunity to consciously and precisely set the position of the rotating blade according to the expected result.

The additional drawback of the traditional coffee grinders concerns the complexity of the mechanical structure, with specific reference to the operation of the crown used for the manual adjustment of the height position of the shaft that supports and drives the rotating blade.

It must be considered that such a crown of the shaft of the coffee grinder must be alternatively capable of engaging with said shaft to enable the travels in vertical direction, and of losing such a prismatic coupling with the shaft, when the latter is to be driven into rapid rotation by the motor for the purpose of grinding the coffee.

Therefore, the main purpose of the present invention is to provide a coffee grinder that allows the user to precisely set the mutual distance between the fixed blade and the rotating blade, depending on the specific grain size of the coffee powder.

A further purpose of the present invention is to display the distance set from time to time between the two blades on suitable display means, so that the data can be controlled by the user in real time and can be stored for the grinding operations to be performed in the future in order to obtain a coffee powder of the same grain size.

The ultimate purpose of the present invention is to simplify the mechanical structure of the coffee grinder, with specific reference to the means provided to adjust the height of the shaft of the electric motor.

These purposes were achieved in accordance with the invention with the features listed in the attached independent claim 1.

Advantageous embodiments of such an invention appear from the dependent claims.

The coffee grinder according to the invention comprises a hopper suitable for holding coffee beans that is disposed at the top of a body that contains the operating parts of said coffee grinder, starting with the two traditional blades, namely a fixed blade and a rotating blade, that are in charge of grinding the coffee beans that descend toward them from the hopper.

The fixed blade is supported by an upper blade holder attached inside the body inferiorly to said hopper, whilst the rotating blade supported by a lower blade holder is keyed near the upper end of the shaft of the electric motor that drives said coffee grinder.

The shaft is mounted vertically in the center of the body together with the respective motor and is capable of making alternate vertical strokes while maintaining a parallel position, in a condition in which the ascending travels of said shaft will bring the rotating blade closer to the fixed blade and vice versa in the opposite case.

An axial tappet is provided at the lower end of said shaft and is suitable for being subjected to the interference of an oscillating lever hinged at a lower height with respect to said tappet, in lateral position to the motor.

The cooperation logic between the oscillating lever and the motor shaft is such that, when it is inclined upward, said lever exerts a thrust on the tappet, followed by an upward travel of the shaft of the motor and consequently of the rotating blade keyed to it.

As it is better illustrated below, such an actuation of the lever is favored by an actuator that is manually operated by a knob mounted at the top of the body of the coffee grinder, next to the hopper in which the coffee is loaded.

Starting from such a structural arrangement, the particularly advantageous feature of the new coffee grinder consists in the fact that it is provided with means for the detection and the instantaneous display of the inclination angle assumed from time to time by the oscillating lever and therefore of the value of the ascending travel imposed by said lever on the shaft of the motor.

In view of the above, the user can set and visually verify the distance between the rotating blade and the fixed blade with the utmost precision for the purpose of determining or reproducing the specific grain size required for the coffee powder.

As it will become more evident below, the means for the detection and display of the operating conditions of the coffee grinder according to the invention can be of either mechanical or electronic type.

For the sake of explanatory clarity, the description of the invention continues with reference to the attached drawings, which are for illustrative and non-limiting purposes only, wherein:
- Fig. 1 is a perspective view of the coffee grinder in question;
- Fig. 2 is an enlarged detail of Fig. 1;
- Fig. 3 is the front view of Fig. 1;

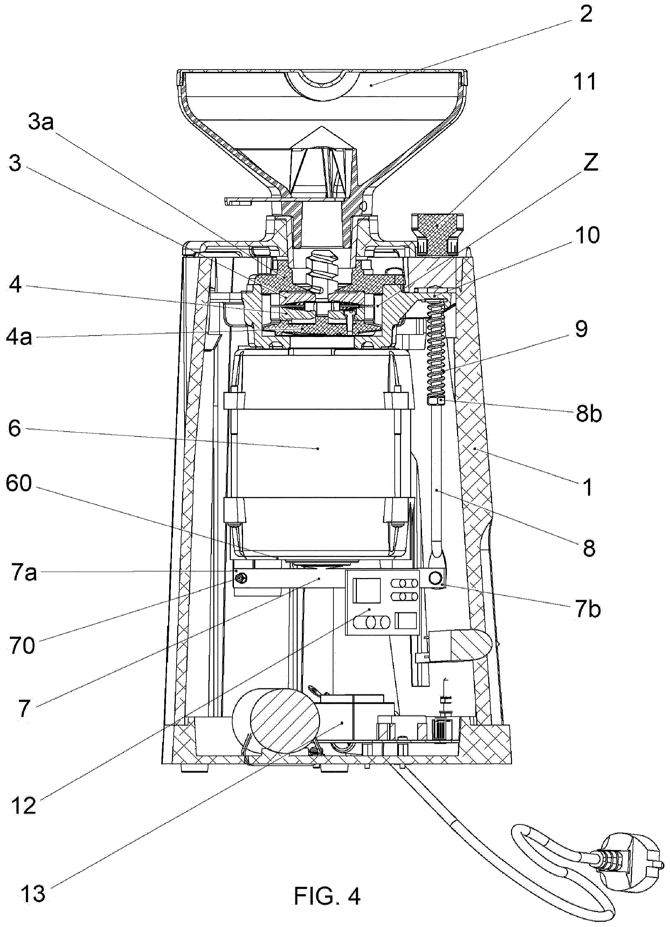

- Fig. 4 is the section of Fig. 1 with a vertical plane passing through the axis of the rotation shaft of the electric motor mounted in the coffee grinder in question;
- Fig. 5 is an axonometric view of the motor mounted in the coffee grinder in question;
- Fig. 6 is a section of Fig. 5 with the V-V plane passing through the axis of the motor;
- Fig. 7 is a block diagram of the electronics used in the coffee grinder in question;
- Fig. 8 shows one of the possible graphic configurations of the display adopted in the coffee grinder in question.

With reference to the Figures, the coffee grinder (MC) according to the invention generally comprises a body (1) with vertical development, which is suitable for housing the main operating parts.

A hopper (2) suitable for being loaded with the coffee beans and capable of conveying them inside said body (1) in a grinding chamber (Z) is mounted at the top of said body (1).

A fixed blade (3) with vertical axis supported by a blade holder (3a) is arranged in the grinding chamber (Z); said fixed blade (3) is suitable for cooperating with a rotating blade (4) that is interfaced to the fixed blade (3) and is supported by a respective blade holder (4a).

The body (1) houses an electric motor (6) arranged in vertical position and supported in intermediate position between a lower semi-body (60) and an upper semi-body (61) that are joined together by a radial set of tie rods (V).

The function of said motor (6) is to drive into rotation a shaft (5) that includes an upper end (5a) on which the blade holder (4a) of the rotating blade (4) is keyed, said rotating blade (4) being driven into rotation integrally with the shaft (5) inside the grinding chamber (Z).

For such a purpose, the upper end (5a) of the shaft (5) protrudes upward through a hole (61a) provided in the center of the upper semi-body (61), whereas the lower end (5b) of said shaft (5) cooperates with a tappet (50) that protrudes from the lower semi-body (60) through a central hole (60a) provided in the lower semi-body.

The shaft (5) can make alternative travels in axial direction between a lower endpoint and an upper endpoint.

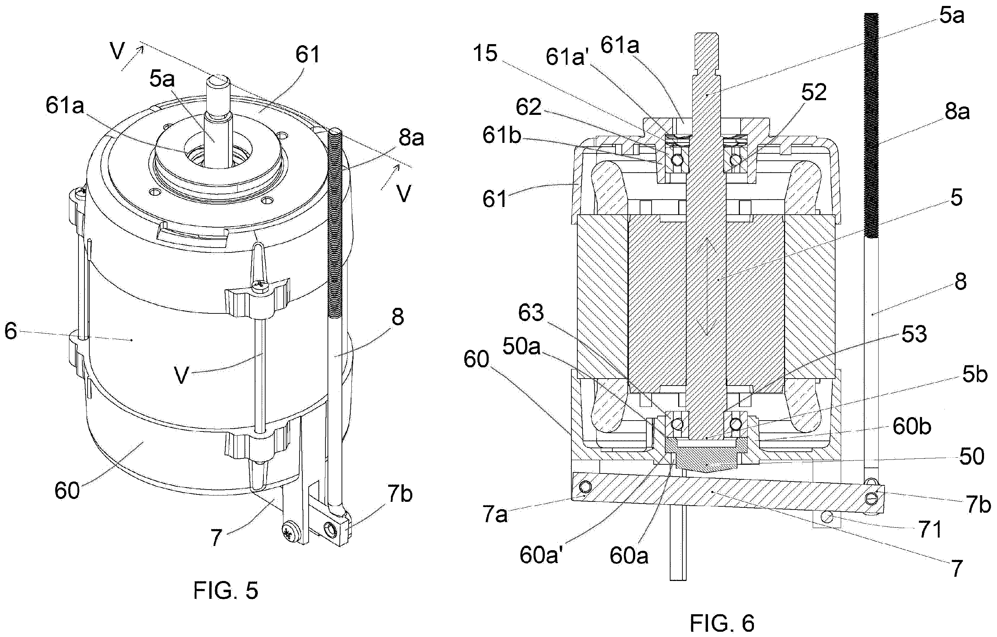

When the shaft (5) reaches its lower endpoint, the two blades (3, 4) are arranged at the maximum distance and the tappet (50) is at the maximum extraction point under the lower semi-body (60) of the motor (6), as shown in Fig. 6.

Conversely, when the shaft (5) reaches its upper endpoint, the two blades (3, 4) are arranged at the minimum distance and the tappet (50) partially returns inside said lower semi-body (60) of the motor (6).

With reference to Fig. 6, it should be noted that said shaft (5) is supported by a first bearing (62) mounted inferiorly to said upper end (5a) of the shaft (5) and by a second bearing (63) mounted at the lower end (5b) of said shaft (5).

Specifically, the first bearing (62) is stopped against an inferior perimeter shoulder (52) provided on the shaft (5) and is engaged in a cylindrical seat (61a) formed in the center of the upper semi-body (61) of the motor (6), on the inside of the hole (61a).

Said first bearing (62) is also capable of sliding inside the seat (61b) during the inverse axial travels of the shaft (5).

The second bearing (63) is stopped against an upper shoulder (53) provided on the shaft (5) and is engaged in a respective cylindrical seat (60b) formed on said lower semi-body (60) of the motor (6) on the inside of said central hole (60a).

Exactly like the first bearing (62), said second bearing (63) is also capable of sliding in the respective seat (60b) during the axial travels of the shaft (5).

Moreover, it should be noted that the coffee grinder (MC) is designed in such a way that the shaft (5) is spontaneously held at its lower endpoint.

As a matter of fact, it should be considered that a spring (15) is engaged in said first seat (61b) of the upper semi-body (61) of the motor (6) and is inserted along the shaft (5) above the first bearing (62); it being provided that said spring (15) is firmly engaged against an upper perimeter step (61a') that is generated at the junction point between the hole (61a) and the cylindrical seat (61b).

In such a condition, the function of the spring (15) is to permanently discharge its thrust on the first bearing (62), so that the shaft (5) is permanently subjected to an axial downward thrust.

Furthermore, it should be noted again that the tappet (50) comprises an upper perimeter collar (50a) that is slidingly inserted in said cylindrical seat (60b), which also guides the travels of the second bearing (63), in such a condition that said second bearing (63) interfaces and cooperates with the collar (50a) of the tappet (50).

Therefore, the downward sliding imposed on the shaft (5) by the spring (15) is transmitted to the tappet (50) by means of the second bearing (63) and is stopped when the collar (50a) of said tappet (50) is stopped against a corresponding step (60a') that is generated at the junction point between the hole (60a) and the cylindrical seat (60b).

The present description continues by illustrating the methods provided in the new coffee grinder (MC) to allow the user to enable the selective sliding of the shaft (5) toward its upper endpoint and to accurately select the distance between the rotating blade (4) integral to said shaft (5) and the fixed blade (3) mounted in the grinding chamber (Z).

For such a purpose, the new coffee grinder (MC) is provided with an oscillating lever (7) pivoted at its first end (7a) with respect to a horizontal pin (70) on one side of the bottom wall of the lower semi-body (60) of the motor (6); wherein said oscillating lever (7) is suitable for interfering with said tappet (50) attached to the lower end (5b) of said shaft (5), as explained below.

It must be noted that the oscillating lever (7) can be alternately disposed in a basically horizontal position, as shown in Fig. 6, wherein it does not stress the tappet (50) of the shaft (5), and in an operating, upwardly inclined position wherein it exerts its thrust on the tappet (50).

Such an inclination of the oscillating lever (7) is produced by the user by operating a maneuvering rod (8) with vertical position, which is pivoted at the second end (7b) of said oscillating lever (7) and appropriately protrudes with respect to the bottom wall of the lower semi-body (60) of the motor (6) on the opposite side relative to the pivoting point of its first end (7a).

Preferably, the rod (8) has a cylindrical profile and is provided with an upper threaded section (8a) that is inserted into a cylindrical helical spring (9) interposed between a shoulder (8b) provided on said rod (8) and a tab (10) mounted in projecting position on the outside of the said grinding chamber (Z).

Moreover, the upper end of said rod (8) protrudes shortly from the upper wall of the body (1), in such a way to be helically coupled with the internally threaded bulb of an actuating knob (11) that operates on the outside of said body (1) in a position adjacent to the hopper (2).

In view of the above, the knob (11) and the threaded section (8a) of the rod (8) operate as a "screw and female screw" assembly, in a condition whereby, depending on its direction, the rotation imposed by the user onto the knob (11) will cause the rod (8) to travel up and down, respectively.

Due to the foregoing kinematic chain, it can be understood how the traction exerted upward on the rod (8) causes the consequent upward inclination of the oscillating lever (7), the interference of said oscillating lever (7) on the tappet (50) of the shaft (5), the ascent of said shaft (5) toward the top of the body (1) and, ultimately, the approaching of the rotating blade (4) to the fixed blade (3).

At the same time, the helical spring (9) is compressed between its two endpoints (8b, 10), just as the spring (15) is compressed between the first bearing (62) and the upper perimeter step (61a') belonging to the upper semi-body (61) of the motor (6)

It should be noted that the oscillating lever (7) lies in a vertical plane passing through the axis of the shaft (5) and the center of the knob (11), that is to say, through the V-V plane of Fig. 5.

Evidently, the inverse rotation of the knob (11) actuates the kinematic chain in opposite direction, favoring the descent of the rod (8), returning the oscillating lever (7) to the idle position, allowing the descent of the shaft (5) of the motor (6), which is favored by the new extension of the spring (15), and increasing the distance between the rotating blade (4) and the fixed blade (3).

In such a context, a new extension of the previously compressed spring (9) is also generated, said spring (9) having the function of returning the oscillating lever (7) to its lowered idle position, in contact against a reference point (71).

The advantage of adopting such a system for adjusting the position of the rotating blade (4) relative to the fixed blade (3) is related to the fact that said system can be implemented with means for the fine setting and the instantaneous display of the mutual position of the two blades (3, 4), in a context in which the information obtained from time to time with reference to the mutual positioning of said blades (3, 4) can be interpreted as the index of a specific grain size attributed to the coffee powder during the grinding operation.

According to a first embodiment, the means for the fine setting and the instantaneous detection of the mutual position of the two blades (3, 4) is of mechanical or analog type.

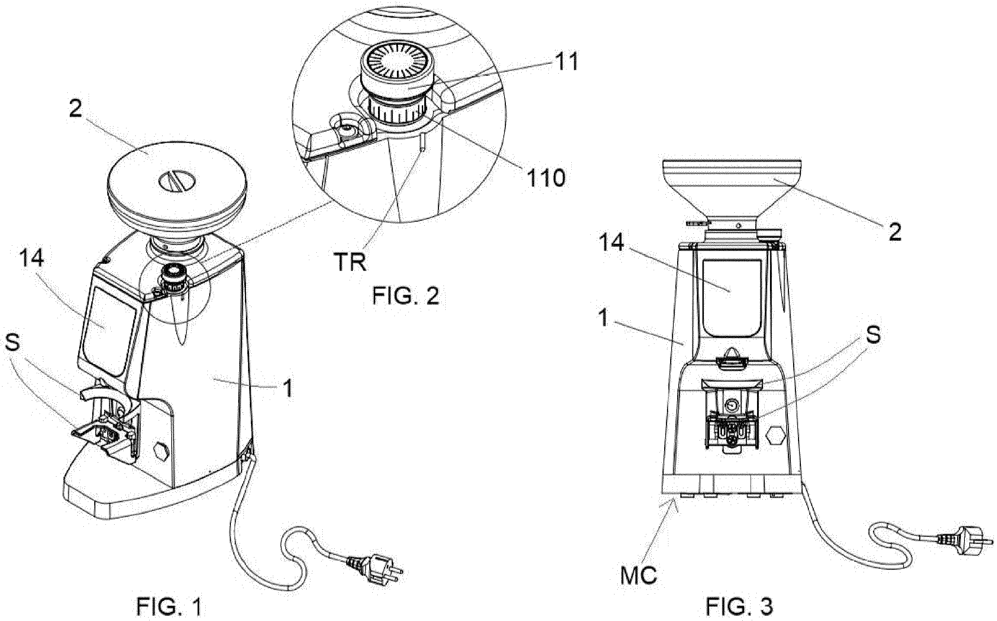

More specifically, the bulb of said knob (11) is externally covered by a strap (110) provided with a radial set of reference lines that the user can selectively relate to a reference notch (TR) provided on the body (1) of the coffee grinder (MC) by rotating the knob (11), as shown in Fig. 2.

In view of the above, the user can set and verify the angle of the rotation made by said knob (11) and thus the distance assumed by the rotating blade (4) with respect to the fixed blade (3), as a result of the axial travel imposed from time to time on the shaft (5).

Alternatively, the knob (11) can be provided with a radial reference notch that is sighted from time to time with a radial set of lines provided on an annular boss fixed on the body (1), in the center of which the bulb of said knob (11) protrudes.

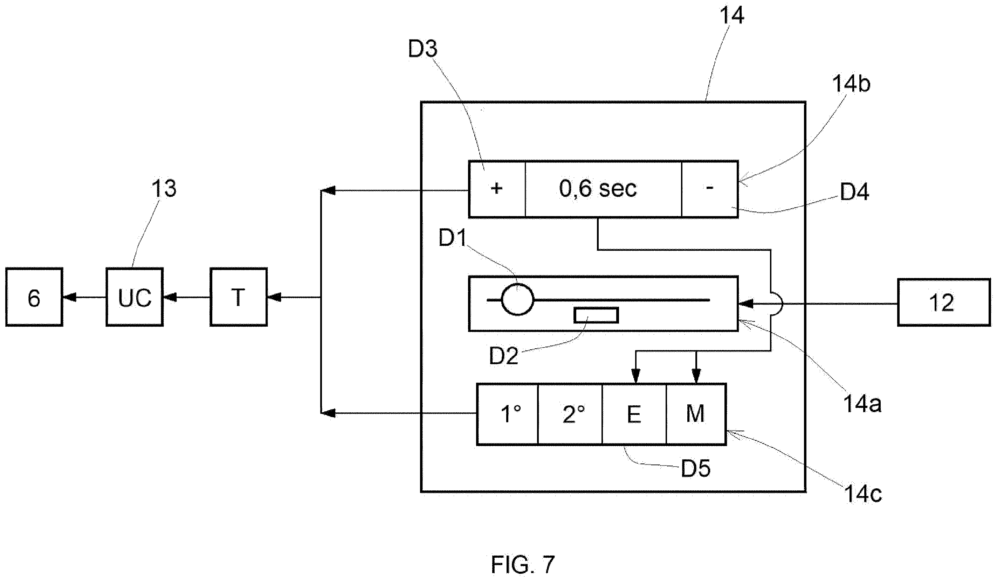

According to a second embodiment, the means for the instantaneous detection of the mutual position of the two blades (3, 4) is of digital type, as shown in the block diagram of Fig. 7.

Specifically, an electronic sensor (12) suitable for reading the variations of the angular movement of the oscillating lever (7) is installed inside the body (1), near the bottom wall of the lower semi-body (60) of the motor (6).

The coffee grinder (MC) is also equipped with an electronic management and control unit (13) suitable for switching the motor (6) on and off.

The electronic sensor (12) is interfaced with the electronic board of a display (14) mounted on the front of the body (1), which is interfaced with said management and control unit (13) housed in the body (1).

The board of the display (14) receives the data detected by said sensor (12) and shows it in a first portion (14a) of said display (14), so as to immediately display the position assumed from time to time by the rotating blade (4) with respect to the fixed blade (3), depending on the variation of the angular position of the oscillating lever (7), as measured by said sensor (12).

Specifically, said first portion (14a) of the display (14) comprises a horizontal line with respect to which a circular cursor (D1) slides back and forth, depending on the direction of rotation of the knob (11), whereas at the same time a numerical figure (D2) representing the distance between the blades (3, 4) is updated accordingly.

The display (14) also includes a second portion (14b) in which the time measured by a timer (T) interfaced with the board of the display (14) is visible, wherein said timer (T) measures the grinding time of the coffee which correspond to the activation time of the motor (6) expressed in seconds.

Moreover, the second portion (14b) of the display comprises two buttons + and - (D3, D4) that can be used by the user to increase or decrease the grinding time.

The board of the display (14) also comprises a memory interfaced with a push-button panel (D5) provided in a third portion (14c) of the display (14).

According to the preferred embodiment of the display (14), the push-button panel (D5) comprises the user-settable buttons (1, 2, E, M), in which:
- the activation of button 1 enables the operation of the motor (6) for a preset time that corresponds to the dispensing of a single dose of coffee powder;
- the activation of button 2 enables the operation of the motor (6) for a preset time that corresponds to the dispensing of a double dose of coffee powder;
- the operation of the E and M buttons enables the operation of the motor (6) for different times than those that are set with the buttons 1 and 2; wherein the different operation time of the motor (6) can be set with the buttons + and - of the timer (T) and stored in association with said buttons E and M.

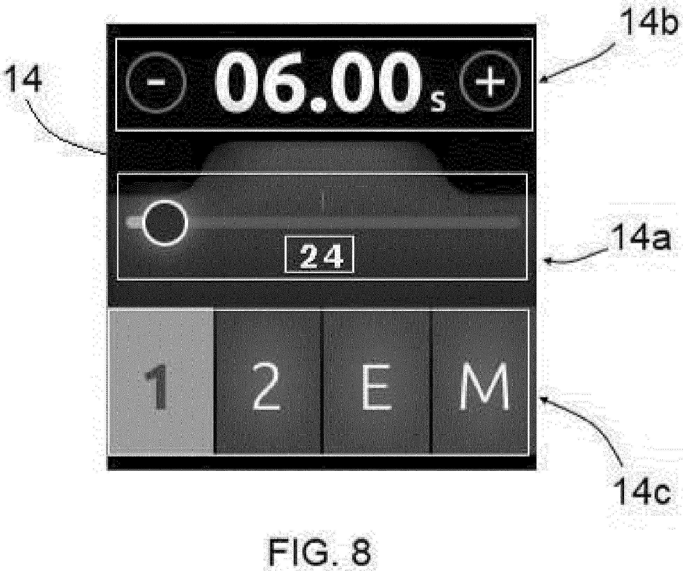

Fig. 8 shows a possible graphic realization of the display (14).

Finally, it should be noted that the coffee grinder according to the invention (MC) is usually provided on the front wall of the body (1) with a support assembly (S) suitable for supporting an ordinary filter holder of a coffee machine or any different receptacles when they are filled with the coffee powder produced by the coffee grinder (MC).

## Claims

1. Coffee grinder comprising:
- a body (1) provided at the top of a hopper (2) that conveys the coffee beans in the direction of a grinding chamber (Z) housed in said body (1);
- a pair of blades (3, 4) with vertical axis, each of them being supported by a respective blade holder (3a, 4a), which are housed in said grinding chamber (Z), wherein the upper blade is a fixed blade (3) and the lower blade is a rotating blade (4);
- an electric motor (6) housed in vertical position inside said body (1) and suitable for driving a shaft (5) capable of making alternate travels in axial direction from a lower endpoint to an upper endpoint, as well as provided with an upper end (5a) and a lower end (5b); wherein the upper end (5a) of said shaft (5) is engaged in said grinding chamber (Z) to drive said rotating blade (4) keyed to it;
- an upper bearing (62) and a lower bearing (63) supporting the support of the shaft (5);
- means to enable the alternating travels of the shaft (5) for the purpose of adjusting the distance of the rotating blade (4) with respect to the fixed blade (3);
- a support assembly (S) suitable for supporting an ordinary filter holder of a coffee machine or any other receptacles;
coffee grinder (MC) **characterized by** the fact that the means used to enable the alternate travels of the shaft (5) comprise:
- an oscillating lever (7) with a first end (7a) and a second end (7b), wherein said first end (7a) is pivoted inferiorly to said motor (6), on one side of said motor (6), relative to a pin (70) with horizontal axis; wherein said oscillating lever (7) is suitable for being alternately disposed in a substantially horizontal idle position and in an inclined operating position, with the second end (7b) raised relative to said pin (70);
- a rod (8) operating in parallel position to the shaft (5) and pivoted at the second end (7a) of the oscillating lever (7); wherein said rod (8) is provided at the top with a threaded section (8a) which protrudes outside the body (1) in order to be helically coupled with a knob (11) suitable for imposing an ascending travel or a descending travel on said rod (8) according to the direction of rotation imposed on it;
- a tappet (50) which cooperates and interfaces with said second bearing (63) mounted at said lower end (5b) of said shaft (5); wherein said tappet (50) is suitable for being subjected to the interference of said oscillating lever (7) when said oscillating lever (7) is in the inclined operating position to generate an upward sliding of said shaft (5).

2. The coffee grinder according to claim 1, wherein said coffee grinder (MC) comprises means for the instantaneous detection of the distance between the fixed blade (3) and the rotating blade (4); wherein said means are of analog type.

3. The coffee grinder according to claim 2, wherein said means for instantaneous detection of the distance between the fixed blade (3) and the rotating blade (4) consist of lines and/or notches of mutual reference provided between the knob (11) and the surface of the body (1).

4. The coffee grinder according to claim 1, wherein said coffee grinder (MC) comprises means for the instantaneous detection of the distance between the fixed blade (3) and the rotating blade (4); wherein said means are of digital type.

5. The coffee grinder according to claim 4, wherein said means for the instantaneous detection of the distance between the fixed blade (3) and the rotating blade (4) consist of:
- an electronic sensor (12) mounted inside the body (1) in a useful position to detect the variations in the angular position of said oscillating lever (7);
- a display (14) mounted on the outside of said body (1), suitable for displaying the variations in the angular position of the oscillating lever (7) detected by the sensor (12) in real time;
- an electronic board associated with the display (14) and suitable for receiving the data detected by the sensor (12) and show it on the display (14).

6. The coffee grinder according to claim 5, wherein:
- the motor (6) is driven by a management and control unit (13);
- the board of the display (14) comprises a timer (T) and is interfaced with the management and control unit (13) in order to enable the operation time of the motor (6);
- the display (14) comprises buttons + and - (D3, D4) that can be used by the user to set the grinding time of the coffee.

7. The coffee grinder according to claim 6, wherein the display (14) comprises buttons 1, 2, E and M, wherein:
- button 1 enables the operation of the motor (6) for a preset time that corresponds to the dispensing of a single dose of coffee powder;
- button 2 enables the operation of the motor (6) for a preset time that corresponds to the dispensing of a double dose of coffee powder;
- buttons E and M enable the operation of the motor (6) for a different time than the one set with buttons 1 and 2; wherein the different operation time of the motor (6) can be set with the buttons + and - (D3, D4) of the timer (T) and stored in association with said buttons E and M.

8. The coffee grinder according to one of the preceding claims, wherein a cylindrical helical spring (80) is inserted into said threaded section (8a) of the rod (8) and is arranged between a shoulder (8b) provided on said rod (8) and a tab (10) mounted in projecting position on the outside of the grinding chamber (Z).

9. The coffee grinder according to one of the previous claims, wherein the shaft (5) supporting the blade holder (4a) of the rotating blade (4) is the shaft of the motor (6).

## Patentansprüche

1. Kaffeemühle, umfassend:
- ein Gehäuse (1), das an der Oberseite mit einem Trichter (2) versehen ist, der die Kaffeebohnen in Richtung einer Mahlkammer (Z) fördert, die in dem Gehäuse (1) untergebracht ist;
- ein Paar von Messern (3, 4) mit vertikaler Achse, die jeweils von einem jeweiligen Messerhalter (3a, 4a) gestützt werden, im Innern der Mahlkammer (Z) untergebracht sind, wobei das obere Messer ein feststehendes Messer (3) ist und das untere Messer ein rotierendes Messer (4) ist;
- einen Elektromotor (6), der in vertikaler Stellung im Innern des Gehäuses (1) untergebracht und dazu geeignet ist, eine Welle (5) anzutreiben, die in der Lage ist, alternierende Verfahrwege in axialer Richtung von einem unteren Endanschlagpunkt zu einem oberen Endanschlagpunkt auszuführen und die mit einem oberen Endabschnitt (5a) und einem unteren Endabschnitt (5b) versehen ist; wobei der obere Endabschnitt (5a) der Welle (5) in die Mahlkammer (Z) eingreift, um das auf sie aufgezogene, rotierende Messer (4) anzutreiben;
- ein oberes Lager (62) und ein unteres Lager (63) zum Stützen des Trägers der Welle (5);
- Mittel zur Aktivierung der alternierenden Verfahrwege der Welle (5), um den Abstand einzustellen, den das rotierende Messer (4) in Bezug auf das feststehende Messer (3) einnimmt;
- eine Trägeranordnung (S), die dazu geeignet ist, einen üblichen Filterhalter einer Kaffeemaschine oder allfälliger anderer Behälter zu stützen;
wobei die Kaffeemühle (MC) **dadurch gekennzeichnet ist, dass** die Mittel, die zum Aktivieren der alternierenden Verfahrwege der Welle (5) verwendet werden, Folgendes umfassen:
- einen Schwinghebel (7), der mit einem ersten Endabschnitt (7a) und einem zweiten Endabschnitt (7b) versehen ist, wobei der erste Endabschnitt (7a) unterseitig an dem Motor (6) an einer Seite des Motors (6) in Bezug auf einen Zapfen (70) mit horizontaler Achse angelenkt ist; wobei der Schwinghebel (7) dazu geeignet ist, alternativ eine im Wesentlichen horizontale Ruhestellung und eine geneigte Arbeitsstellung einzunehmen, in der sein zweiter Endabschnitt in Bezug auf den Zapfen (70) angehoben ist;
- eine Stange (8), die in paralleler Stellung zu der Welle (5) wirkt und am zweiten Endabschnitt (7a) des Schwinghebels (7) angelenkt ist; wobei die Stange (8) oberseitig einen Gewindeabschnitt (8a) aufweist, der aus dem Gehäuse (1) vorsteht, um schraubenförmig mit einem Knopf (11) gekoppelt zu werden, der dazu geeignet ist, der Stange (8) je nach der damit eingestellten Drehrichtung einen Aufwärtshub oder einen Abwärtshub aufzuerlegen;
- einen Stößel (50), der mit dem zweiten Lager (63) zusammenwirkt, das an dem unteren Endabschnitt (5b) der Welle (5) montiert ist; wobei der Stößel (50) dazu geeignet ist, in dem Moment, in dem der Hebel (7) seine geneigte Arbeitsstellung einnimmt, der Einwirkung des Schwinghebels (7) zu unterliegen, um ein Aufwärtsgleiten der Welle (5) zu erzeugen.

2. Kaffeemühle nach Anspruch 1, wobei die Kaffeemühle (MC) Mittel zur sofortigen Erfassung des Abstands zwischen dem feststehenden Messer (3) und dem rotierenden Messer (4) umfasst; wobei die Mittel vom analogen Typ sind.

3. Kaffeemühle nach Anspruch 2, wobei die Mittel zur sofortigen Erfassung des Abstands zwischen dem feststehenden Messer (3) und dem rotierenden Messer (4) aus aufeinander bezogenen Linien und/oder Kerben besteht, die zwischen dem Knopf (11) und der Oberfläche des Gehäuses (1) vorgesehen sind.

4. Kaffeemühle nach Anspruch 1, wobei die Kaffeemühle (MC) Mittel zur sofortigen Erfassung des Abstands zwischen dem feststehenden Messer (3) und dem rotierenden Messer (4) umfasst; wobei die Mittel vom digitalen Typ sind.

5. Kaffeemühle nach Anspruch 4, wobei die Mittel zur Erfassung des Abstands zwischen dem feststehenden Messer (3) und dem rotierenden Messer (4) bestehen aus:
- einem elektronischen Sensor (12), der im Innern des Gehäuses (1) in einer Stellung montiert ist, die dazu geeignet ist, die Änderungen der Winkelstellung des Schwinghebels (7) zu erfassen;
- einem Display (14), das auf der Außenseite des Gehäuses (1) montiert ist und dazu geeignet ist, die von dem Sensor (12) erfassten Änderungen der Winkelstellung des Schwinghebels (7) in Echtzeit anzuzeigen;
- einer Elektronikplatine, die mit dem Display (14) verbunden ist und dazu geeignet ist, die von dem Sensor (12) erfassten Daten zu empfangen und auf dem Display (14) anzuzeigen.

6. Kaffeemühle nach Anspruch 5, wobei:
- der Motor (6) von einer Verwaltungs- und Steuereinheit (13) angetrieben wird;
- die Platine des Displays (14) einen Timer (T) umfasst und mit der Verwaltungs- und Steuereinheit (13) verbunden ist, um die Betriebszeit des Motors (6) zu aktivieren;
- das Display (14) Plus- und Minustasten (D3, D4) umfasst, die vom Benutzer verwendet werden können, um die Mahlzeit des Kaffees einzustellen.

7. Kaffeemühle nach Anspruch 6, wobei das Display (14) die Tasten 1, 2, E und M umfasst, wobei:
- die Taste 1 den Betrieb des Motors (6) für eine voreingestellte Zeit aktiviert, die der Ausgabe einer einzelnen Portion Kaffeemehl entspricht;
- die Taste 2 den Betrieb des Motors (6) für eine voreingestellte Zeit aktiviert, die der Ausgabe einer doppelten Portion Kaffeemehl entspricht;
- die Tasten E und M den Betrieb des Motors (6) für andere Zeiten aktiviert, die mit den Tasten 1 und 2 einstellbar sind; wobei diese anderen Betriebszeiten des Motors (6) mittels der Plustasten und Minustasten (D3, D4) des Timers (T) einstellbar und in Verbindung mit den Tasten E und M speicherbar sind.

8. Kaffeemühle nach einem der vorstehenden Ansprüche, wobei eine zylindrische Schraubenfeder (80) in den Gewindeabschnitt (8a) der Stange (8) eingesteckt ist und zwischen einer auf der Stange (8) vorgesehenen Schulter (8b) und einer Anschlagrippe (10) angeordnet ist, die auf der Außenseite der Mahlkammer (Z) nach außen vorstehend montiert ist.

9. Kaffeemühle nach einem der vorstehenden Ansprüche, wobei die Welle (5), die den Messerhalter (4a) des rotierenden Messers (4) trägt, die Welle des Motors (6) ist.

## Revendications

1. Moulin à café comprenant :
- un corps (1) doté à son sommet d'une trémie (2) qui convoie les grains de café en direction d'un sous-jacent module de mouture (Z) logé dans ledit corps (1) ;
- une paire de meules à axe vertical (3, 4), chacune soutenue par un respectif porte-meule (3a, 4a), logées à l'intérieur du susdit module de mouture (Z), où la meule supérieure (3) est fixe et la meule inférieure (4) est rotative ;
- un moteur électrique (6) logé en position verticale dans ledit corps (1) et apte à actionner un arbre (5) en mesure d'accomplir des courses alternées en direction axiale, depuis un point de fin de course inférieur à un point de fin de course supérieur, et doté d'une extrémité supérieure (5a) et d'une extrémité inférieure (5b) ; où l'extrémité supérieure (5a) du susdit arbre (5) se loge dans le susdit module de mouture (Z) pour actionner la susdite meule rotative (4) caletée sur elle ;
- un coussinet supérieur (62) et un coussinet inférieur (63) de support pour le susdit support de l'arbre (5) ;
- des moyens pour activer les susdites courses alternées de l'arbre (5) aux fins du réglage de la distance que la meule rotative (4) assume chaque fois par rapport à la sus-jacente meule fixe (3) ;
- un groupe de support (S) apte à soutenir un porte-filtre traditionnel d'une machine à café ou des éventuels récipients différents ;
moulin à café (MC) **caractérisé en ce que** les susdits moyens qui activent les susdites courses alternées de l'arbre (5) comprennent :
- un levier basculant (7) doté d'une première extrémité (7a) et d'une seconde extrémité (7b), où ladite première extrémité (7a) est pivotée inférieurement au susdit moteur (6), sur un côté du susdit moteur (6), par rapport à un pivot à axe horizontal (70) ; où ledit levier basculant (7) est apte à assumer alternativement une position de repos pratiquement horizontale et une position opérationnelle inclinée, avec sa propre seconde extrémité (7b) soulevée par rapport au susdit pivot de pivotement (70) ;
- une tige (8) qui fonctionne dans une position parallèle au susdit arbre (5) et pivotée en correspondance de la seconde extrémité du levier basculant (7) ; où ladite tige (8) présente à son sommet un segment fileté (8a) qui déborde hors du susdit corps (1) pour s'accoupler hélicoidalement à un pommeau (11) apte à imposer, en fonction du sens de rotation qui lui est imposé, une course de montée et une course de descente à ladite tige (8) ;
- un poussoir (50) qui coopère et s'interface avec le susdit second coussinet (63) monté en correspondance de la susdite extrémité inférieure (5b) du susdit arbre (5) ; où ledit poussoir (50) est apte à subir, au moment où le levier basculant (7) assume sa susdite position opérationnelle inclinée, l'interférence du susdit levier (7) pour générer un glissement vers le haut du susdit arbre (5).

2. Moulin à café selon la revendication 1, où ledit moulin à café (MC) comprend des moyens pour détecter instantanément la distance entre la meule fixe (3) et la meule rotative (4) ; où lesdits moyens sont du type analogique.

3. Moulin à café selon la revendication 2, où lesdits moyens pour détecter instantanément la distance entre la meule fixe (3) et la meule rotative (4) consistent en lignes et/ou encoches de référence réciproque prévues sur le susdit pommeau (11) et la surface du corps (1).

4. Moulin à café selon la revendication 1, où ledit moulin à café (MC) comprend des moyens pour détecter instantanément la distance entre la meule fixe (3) et la meule rotative (4) ; où lesdits moyens sont du type numérique.

5. Moulin à café selon la revendication 4, où lesdits moyens pour détecter instantanément la distance entre la meule fixe (3) et la meule rotative (4) consistent en :
- un capteur électronique (12) monté à l'intérieur du corps (1) en position utile pour détecter les variations de la position angulaire du susdit levier basculant (7) ;
- un afficheur (14), monté à l'extérieur du susdit corps (1), apte à afficher en temps réel les susdites variations de la position angulaire du levier basculant (7) détectées par le capteur (12) ;
- un carte électronique associée au susdit afficheur (14) apte à recevoir les données détectées par le susdit capteur (12) et les afficher sur ledit afficheur (14).

6. Moulin à café selon la revendication 5, où :
- le susdit moteur (6) est actionné par une unité de gestion et de commande (13) ;
- la susdite carte de l'afficheur (14) comprend un minuteur (T) et elle est interfacée avec la susdite unité de gestion et de commande (13), aux fins d'activer les temps de fonctionnement du moteur (6) ;
- le susdit afficheur (14) comprend les touches + et - (D3, D4) grâce auxquelles l'utilisateur peut programmer le temps de mouture du café.

7. Moulin à café selon la revendication 6, où le susdit afficheur (14) comprend les touches 1°, 2°, E et M, où :
- la touche 1° active le fonctionnement du moteur (6) pour un délai préfixé auquel correspond le débit d'une dose individuelle de poudre de café ;
- la touche 2° active le fonctionnement du moteur (6) pour un délai préfixé auquel correspond le débit d'une dose double de poudre de café ;
- les touches E et M activent le fonctionnement du moteur (6) pour des délais différents par rapport à ceux programmables avec les susdites touches 1° et 2° ; où ces délais différents de fonctionnement du moteur (6) sont programmables à l'aide des susdites touches + et - (D3, D4) du minuteur (T) et mémorisables en association avec les susdites touches E et M.

8. Moulin à café selon l'une des revendications précédentes, où le susdit segment fileté (8a) de la tige (8) est enfilé dans un ressort hélicoïdal cylindrique (80) installé entre un épaulement (8b) prévu sur ladite tige (8) et une ailette de butée (10) montée en saillie à l'extérieur de ladite chambre de mouture (Z).

9. Moulin à café selon l'une des revendications précédentes, où le susdit arbre (5) qui soutient le porte-meule (4a) de la meule rotative (4) est l'arbre du susdit moteur (6).
